# EUROPÄISCHE PATENTSCHRIFT

(11) **EP 2 288 530 B1**
(45) Veröffentlichungstag und Bekanntmachung des Hinweises auf die Patenterteilung: **30.11.2016**
(21) Anmeldenummer: 09761425.9
(22) Anmeldetag: 04.06.2009
(51) Int. Cl.: B61L 15/00, G01M 17/00, B61K 9/00

(54) **VERFAHREN ZUR ÜBERWACHUNG WENIGSTENS EINES DAS BETRIEBSVERHALTEN VON FAHRZEUGEN ODER FAHRZEUGZÜGEN BEEINFLUSSENDEN SYSTEMPARAMETERS**
METHOD FOR MONITORING AT LEAST ONE SYSTEM PARAMETER WHICH INFLUENCES THE OPERATING BEHAVIOUR OF VEHICLES OR TRAINS OF VEHICLES
PROCÉDÉ DE SURVEILLANCE D'AU MOINS UN PARAMÈTRE SYSTÈME INFLUENCÉ PAR LE COMPORTEMENT DE FONCTIONNEMENT DE VÉHICULES OU DE TRAINS

(30) Priorität: 13.06.2008 DE 102008028264
(43) Veröffentlichungstag der Anmeldung: 02.03.2011
(73) Patentinhaber: KNORR-BREMSE Systeme für Schienenfahrzeuge GmbH, 80809 München (DE)
(72) Erfinder: WALTER, Manfred, 85375 Neufahrn (DE); NOCK, Marco, 85622 Feldkirchen (DE)
(74) Vertreter: Mattusch, Gundula
(86) Internationale Anmeldenummer: PCT/EP2009/003993
(87) Internationale Veröffentlichungsnummer: WO 2009/149862

(56) Entgegenhaltungen:
- EP-A1- 1 389 573
- WO-A1-01/84105
- WO-A1-2004/022406
- WO-A1-2004/024531
- DE-C1- 19 953 677
- GB-A- 2 378 248

## Beschreibung

### Stand der Technik

Die Erfindung betrifft ein Verfahren zur Überwachung wenigstens eines eine Betriebseigenschaft von Fahrzeugen oder Fahrzeugzügen beeinflussenden Systemparameters gemäß Anspruch 1.

Zunehmende Anforderungen an Betriebssicherheit, Zuverlässigkeit, Effizienz und optimierte Wartungszyklen machen eine Überwachung der Betriebseigenschaften und des Betriebszustandes von Fahrzeugen, insbesondere von Schienenfahrzeugen notwendig. Wichtige, im Rahmen des Betriebsverhaltens zu überwachende Systemparameter von Schienenfahrzeugen sind beispielsweise die Rolleigenschaften, das Kurvenverhalten sowie das Antriebs- und Bremsverhalten.

Aus dem Stand der Technik, beispielsweise aus der DE 198 27 271 B4 sind Überwachungseinrichtungen bekannt, welche die Betriebseigenschaften und den Betriebszustand von Schienenfahrzeugen, insbesondere von deren Drehgestellen anhand von Sensoren ermitteln. Je breiter jedoch der Überwachungsumfang ist, d.h. je mehr Systemparameter überwacht werden müssen, desto höher wird jedoch der sensorische Aufwand, was in komplexen Überwachungseinrichtungen mit höheren Kosten und geringerer Verfügbarkeit resultiert.

Die WO 01/84105 A1 wie auch die GB 2 378 248 A beschreiben Einrichtungen zur Überwachung des Zustands eines Schienenfahrzeugs. Gemäß der WO 01/84105 A1 liefern beispielsweise Beschleunigungssensoren Signale, aus welchen eine das reale Fahrzeugverhalten des Schienenfahrzeugs repräsentierende Hüllkurve einer Häufigkeitsverteilung von Beschleunigungswerten gebildet wird. Diese Hüllkurve wird mit einer vorgegebenen, von Betriebsparametern wie Geschwindigkeit und Fahrstrecke abhängigen und ein theoretisches Fahrzeugverhalten repräsentierenden Grenzwert-Hüllkurve verglichen, derart, dass bei Erreichen wenigstens eines durch die Grenzwert-Hüllkurve vorgegebenen Grenzwerts ein zu detektierendes Ereignis als eingetreten gilt. Weiterhin ist eine selbstlernende Anpassung der Grenzwert-Hüllkurve vorgesehen. Gemäß der GB 2 378 248 A wird aus gemessenen und analysierten Daten zunächst ein wissensbasiertes Modell erstellt, welches einen Normalzustand des Schienenfahrzeugs repräsentiert. Charakteristische Abweichungen von diesem Modell werden als Schadensfall interpretiert. Weiterhin ist eine Anpassung des das das normale Betriebsverhalten des Schienenfahrzeugs repräsentierenden Modells vorgesehen.

Eine Anpassung von theoretischen Modellen aufgrund einer detektierten Abweichung zwischen dem theoretischen Fahrzeug- oder Fahrzeugzugverhalten und dem realen Fahrzeug- oder Fahrzeugzugverhalten ist jedoch nur innerhalb gewisser Grenzen sinnvoll bzw. möglich. War beispielsweise das theoretische Modell bereits von Anfang an in grobem Maße ungenau bzw. unrealistisch, so birgt eine unkritische Modellanpassung vor allem vor dem Hintergrund Gefahren, dass mit dem theoretischen Modell auch sicherheitsrelevante Parameter wie etwa die Bremsleistung des Fahrzeugs überwacht werden.

### Aufgabe der Erfindung

Die Aufgabe der Erfindung besteht demgegenüber darin, ein Verfahren zur Überwachung wenigstens eines eine Betriebseigenschaft von Fahrzeugen oder Fahrzeugzügen beeinflussenden Systemparameters zur Verfügung zu stellen, welches eine größere Sicherheit bietet.

Diese Aufgabe wird gemäß der Erfindung durch die Merkmale von Anspruch 1 gelöst.

### Offenbarung der Erfindung

Die Erfindung schlägt vor, dass eine Überwachung des Systemparameters durch das angepasste theoretische Modell nur dann durchgeführt wird, falls eine Abweichung zwischen dem mit dem ursprünglichen theoretischen Modell ermittelten Systemparameter und dem mit dem angepassten theoretischen Modell ermittelten Systemparameter einen vorgegebenen oberen Grenzwert nicht überschreitet oder einen vorgegebenen unteren Grenzwert nicht unterschreitet und/oder innerhalb eines vorgegebenen Grenzwertbereichs liegt, jedoch eine Fehlermeldung über das Vorliegen eines Fehlers oder einer Störung beim Fahrzeug, beim Fahrzeugzug und/oder bei dem theoretischen Modell generiert wird, falls die Abweichung zwischen dem mit dem ursprünglichen theoretischen Modell ermittelten Systemparameter und dem mit dem angepassten theoretischen Modell ermittelten Systemparameter den vorgegebenen oberen Grenzwert überschreitet oder den vorgegebenen unteren Grenzwert unterschreitet und/oder außerhalb des vorgegebenen Grenzwertbereichs liegt.

Durch die in den Unteransprüchen aufgeführten Maßnahmen sind vorteilhafte Weiterbildungen und Verbesserungen der im Anspruch 1 angegebenen Erfindung möglich.

Besonders bevorzugt beinhalten die Betriebsdaten des Fahrzeugs oder des Fahrzeugzugs weiterhin Anforderungssignale des Fahrers, Streckendaten, Fahrzeugdaten und dergleichen.

Gemäß einer Fortbildung ist der wenigstens eine zu überwachende Systemparameter ein sicherheitsrelevanter Systemparameter wie die Bremsleistung des Fahrzeugs oder des Fahrzeugzugs.

Nicht zuletzt besteht die eingeleitete Gegenmaßnahme in einer Schnellbremsung.

Genaueres geht aus der nachfolgenden Beschreibung eines Ausführungsbeispiels hervor.

### Zeichnung

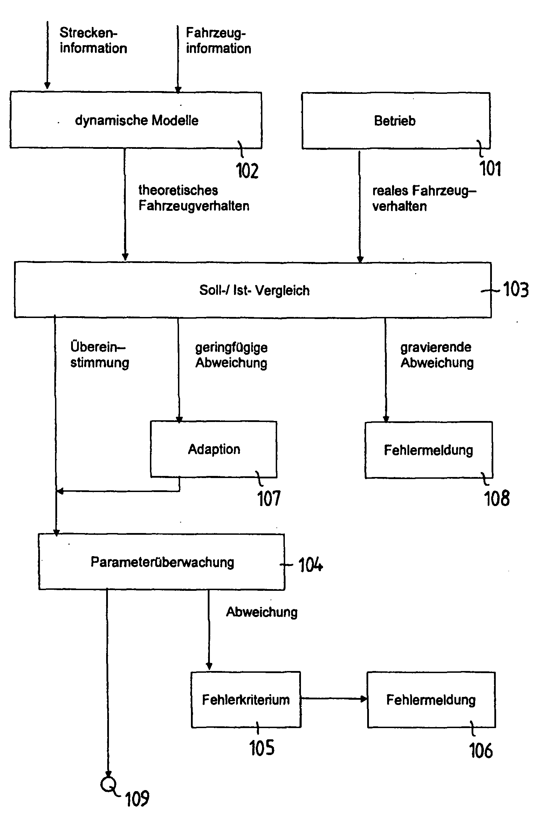

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Ablaufplan einer bevorzugten Ausführungsform des erfindungsgemäßen Verfahrens.

### Beschreibung des Ausführungsbeispiels

Gemäß einer bevorzugten Ausführungsform wird das erfindungsgemäße Verfahren bei einem Fahrzeugzug aus Schienenfahrzeugen beinhaltend sowohl beliebige motorisierte Triebfahrzeuge, sowie ebenso beliebige, nicht angetriebene und an die Triebfahrzeuge angehängte Wagons angewendet, wie auch bei Triebzügen.

Das Verfahren dient zur Überwachung wenigstens eines eine Betriebseigenschaft des Fahrzeugzugs beeinflussenden Systemparameters mit Hilfe eines an die realen Verhältnisse anpassbaren, theoretischen dynamischen Modells 102.

Vorzugsweise ist der wenigstens eine zu überwachende, das Betriebsverhalten des Fahrzeugzugs beeinflussende Systemparameter ein sicherheitsrelevanter Parameter wie beispielsweise die Bremsleistung des Fahrzeugzugs.

Das theoretische dynamische Modell 102 generiert aus Betriebsdaten des Fahrzeugzugs ein theoretisches Fahrzeugzugverhalten in Bezug auf die jeweilige Fahrt. Mit Hilfe des theoretischen dynamischen Modells 102 ist es daher möglich, Vorhersagen über das Fahrzeugzugverhalten in Abhängigkeit von den gerade vorliegenden Betriebsdaten zu treffen.

Diese Betriebsdaten enthalten beispielsweise Daten über den Streckenverlauf (Streckeninformation) und Daten über den Fahrzeugzug (Fahrzeuginformation), wie beispielsweise
- die Neigung (Gefälle, Steigung) der Fahrstrecke,
- die Kurvenradien der Fahrstrecke,
- die Charakteristik des Fahrzeugzugantriebs,
- das Bremsverhalten des Fahrzeugzugs,
- das Gewicht und die Beladung des Fahrzeugzugs,

sowie Anforderungssignale des Fahrzeugzugführers wie Leistungsanforderungssignale an die Antriebsmaschine aus der Fahrhebelstellung oder Bremsanforderungssignale an die Bremsen aus der Bremshebelstellung oder dem Bremsdruck. Diese Betriebsdaten sind bekannt bzw. werden anhand einer Sensorik gemessen und/oder bei modernen Fahrzeugen mit Hilfe von Betriebsleittechnik erfasst.

Weiterhin wird gemäß eines Verfahrensschritts 101 im Betrieb des Fahrzeugzugs das reale Fahrzeugzugverhalten aufgrund von Position und Geschwindigkeit, ermittelt beispielsweise über GPS (Global Position System) oder Leittechnik, und somit die positive oder negative Beschleunigung des Fahrzeugzugs bestimmt. Diese Messungen erfordern nur ein Mindestmaß an Sensorik.

Im Rahmen eines weiteren Verfahrensschritts 103 findet ein Vergleich des realen Fahrzeugverhattens mit den Vorhersagen des dynamischen Modells statt. Hierzu wird das theoretische Fahrzeugzugverhalten auf der Basis der gerade vorliegenden Betriebsdaten mit Hilfe des dynamischen Modells 102 bestimmt.

Bei einer Übereinstimmung des theoretischen Fahrzeugverhaltens mit dem realen Fahrzeugverhalten wird der zu überwachende Systemparameter gemäß Verfahrensschritt 104 weiter überwacht, hier beispielsweise das Bremsverhalten des Schienenfahrzeugzugs. Die Überwachung erfolgt dabei durch das theoretische Modell 102, von welchem es sich gezeigt hat, dass es die Realität bis zu diesem Zeitpunkt hinreichend genau abbildet. Wenn das theoretische dynamische Modell nicht hinreichend genau ist, wird es im Schritt 107 adaptiert, beispielsweise dadurch, dass das Modell 102 selbst lernende Algorithmen beinhaltet

Falls dann die Überwachung durch das theoretische Modell 102 ergibt, dass der jeweilige Systemparameter wie unten beschrieben so anzupassen wäre, dass er einen vorgegebenen Grenzwert über- oder unterschreiten würde bzw. außerhalb eines vorgegebenen Grenzwertbereich im Rahmen wenigstens eines Fehlerkriteriums 105 liegen würde, wird vorzugsweise eine Fehlermeldung 106 erzeugt. Zusätzlich oder anstatt der Fehlermeldung können auch Anweisungen für den Fahrzeugführer erzeugt werden und/oder es werden automatisch Gegenmaßnahmen eingeleitet, wie beispielsweise eine Schnellbremsung.

Falls daher die Bremsleistung, die vorzugsweise den zu überwachenden sicherheitsrelevanten Parameter bildet, unterhalb eines Schwellenwertes der maximal möglichen Bremsleistung liegt, wird bevorzugt eine Fehlermeldung erzeugt. Zusätzlich kann ein Bremsennotlaufprogramm eingeleitet und beispielsweise die Höchstgeschwindigkeit des Fahrzeugzugs von einer möglichen Höchstgeschwindigkeit auf eine im Hinblick auf die reduzierte Bremsleistung zulässige Höchstgeschwindigkeit automatisch begrenzt werden.

Andernfalls, wenn also der durch das theoretische Modell 102 überwachte und wie unten beschriebene laufend angepasste Systemparameter den vorgegebenen Grenzwert nicht über- oder unterschreitet bzw. innerhalb des vorgegebenen Grenzwertbereichs liegt, wird mit der Überwachung durch das dynamische Modell solange fortgefahren, bis eine Abweichung auftritt (Schritt 109).

Falls allerdings keine vollständige Übereinstimmung zwischen dem realen Fahrzeugverhalten und dem theoretischen Fahrzeugverhalten herrscht, wird das theoretische Modell 102 im Rahmen einer Adaption 107 angepasst, bis das theoretische Fahrzeugverhalten mit dem realen Fahrzeugverhalten übereinstimmt. Eine Anpassung des theoretischen Modells 102 in Kombination mit einer Parameterüberwachung kommt allerdings nur dann in Frage, falls eine Abweichung zwischen dem mit dem ursprünglichen theoretischen Modell 102 ermittelten Parameter und dem mit dem angepassten theoretischen Modell 102 ermittelten Parameter einen vorgegebenen oberen Grenzwert nicht über- oder unterschreitet und/oder innerhalb eines vorgegebenen Wertebereichs liegt. In diesem Fall liegt nur eine geringfügige Abweichung zwischen dem mit dem ursprünglichen theoretischen Modell 102 ermittelten Parameter und dem mit dem angepassten theoretischen Modell 102 ermittelten Parameter vor. Danach wird mit den Verfahrensschritten 104 bis 106 bzw. 109 fortgefahren, wie oben beschrieben.

Andernfalls, also wenn die Abweichung zwischen dem mit dem ursprünglichen theoretischen Modell ermittelten Parameter und dem mit dem angepassten theoretischen Modell ermittelten Parameter den vorgegebenen Grenzwert über- oder unterschreitet und/oder außerhalb des vorgegebenen Wertebereichs liegt, ist die Abweichung zu groß. Dann wird eine Fehlermeldung 108 über das Vorliegen eines Fehlers oder einer Störung beim Fahrzeugzug und/oder bei dem theoretischen Modell 102 erzeugt.

Es versteht sich, dass nicht nur ein das Betriebsverhalten des Fahrzeugzugs beeinflussender Systemparameter mit dem Verfahren überwacht werden kann, sondern auch mehrere Parameter parallel. Nicht zuletzt ist das Verfahren nicht nur zur Überwachung von Fahrzeugzügen sondern von einzelnen Fahrzeugen wie Schienen- und Straßenfahrzeuge anwendbar.

## Patentansprüche

1. Verfahren zur Überwachung wenigstens eines eine Betriebseigenschaft von Fahrzeugen oder Fahrzeugzügen beeinflussenden Systemparameters mit Hilfe eines anpassbaren theoretischen Modells (102), welches aus Betriebsdaten des Fahrzeugs oder Fahrzeugzugs ein theoretisches Fahrzeug- oder Fahrzeugzugverhalten generiert, beinhaltend folgende Schritte:
a) Bestimmen eines realen Fahrzeug- oder Fahrzeugzugverhaltens aus Betriebsdaten wie Beschleunigung und/oder Verzögerung des Fahrzeugs oder des Fahrzeugzugs,
b) Vergleich (103) des realen Fahrzeug- oder Fahrzeugzugverhaltens mit dem theoretischen Fahrzeug- oder Fahrzeugzugverhalten (102), und
c1) falls das theoretische Fahrzeug- oder Fahrzeugzugverhalten mit dem realen Fahrzeug- oder Fahrzeugzugverhalten übereinstimmt,
c2) Überwachen (104) des Systemparameters durch das theoretische Modell und falls der Systemparameter einen vorgegebenen oberen Grenzwert überschreitet oder einen vorgegebenen unteren Grenzwert unterschreitet und/oder außerhalb eines vorgegebenen Grenzwertbereichs liegt, Erzeugen einer Fehlermeldung (106) und/oder Erzeugen von Anweisungen für den Fahrzeugführer und/oder automatisches Einleiten von Gegenmaßnahmen, oder
c3) Anpassen des theoretischen Modells (102) bis das theoretische Fahrzeug- oder Fahrzeugzugverhalten mit dem realen Fahrzeug- oder Fahrzeugzugverhalten übereinstimmt und dann Fortfahren mit Schritt c2),
**dadurch gekennzeichnet, dass**
c4) eine Überwachung des Systemparameters durch das angepasste theoretische Modell (102) gemäß Schritt c2) nur dann durchgeführt wird, falls eine Abweichung zwischen dem mit dem ursprünglichen theoretischen Modell (102) ermittelten Systemparameter und dem mit dem angepassten theoretischen Modell (102) ermittelten Systemparameter einen vorgegebenen oberen Grenzwert nicht überschreitet oder einen vorgegebenen unteren Grenzwert nicht unterschreitet und/oder innerhalb eines vorgegebenen Grenzwertbereichs liegt, jedoch
c5) eine Fehlermeldung (108) über das Vorliegen eines Fehlers oder einer Störung beim Fahrzeug, beim Fahrzeugzug und/oder bei dem theoretischen Modell (102) generiert wird, falls die Abweichung zwischen dem mit dem ursprünglichen theoretischen Modell (102) ermittelten Systemparameter und dem mit dem angepassten theoretischen Modell (102) ermittelten Systemparameter den vorgegebenen oberen Grenzwert überschreitet oder den vorgegebenen unteren Grenzwert unterschreitet und/oder außerhalb des vorgegebenen Grenzwertbereichs liegt.

2. Verfahren nach Anspruch 1, **dadurch gekennzeichnet, dass** die Betriebsdaten des Fahrzeugs oder des Fahrzeugzugs weiterhin Anforderungssignale des Fahrers, Streckendaten, Fahrzeugdaten und dergleichen beinhalten.

3. Verfahren nach Anspruch 1 oder 2, **dadurch gekennzeichnet, dass** der wenigstens eine zu überwachende Systemparameter ein sicherheitsrelevanter Systemparameter wie die Bremsleistung des Fahrzeugs oder des Fahrzeugzugs ist.

4. Verfahren nach einem der vorhergehenden Ansprüche, **dadurch gekennzeichnet, dass** die eingeleitete Gegenmaßnahme in einer Schnellbremsung besteht.

## Claims

1. Method for monitoring at least one system parameter which influences an operating property of vehicles or vehicle trains using an adaptable theoretical model (102) which generates a theoretical vehicle behaviour or vehicle train behaviour from operating data of the vehicle or vehicle train, containing the following steps:
a) determination of a real vehicle behaviour or vehicle train behaviour from operating data such as acceleration and / or deceleration of the vehicle or of the vehicle train,
b) comparison (103) of the real vehicle behaviour or vehicle train behaviour with the theoretical vehicle behaviour or vehicle train behaviour (102), and
c1) monitoring (104) of the system parameter by the theoretical model if the theoretical vehicle behaviour or vehicle train behaviour corresponds to the real vehicle behaviour or vehicle train behaviour, and
c2) if the system parameter exceeds or drops below a predefined limiting value and / or lies outside of a predefined limiting value range, generation of a fault message (106) and / or generation of instructions for the vehicle driver and / or automatic initiation of countermeasures, or
c3) adaptation of the theoretical model (102) until the theoretical vehicle behaviour or vehicle train behaviour corresponds to the real vehicle behaviour or vehicle train behaviour and then continuation with step c2),
**characterised in that**
c4) monitoring of the system parameter by the adapted theoretical model (102) is carried out according to step c2) only when a deviation between the system parameter acquired with the original theoretical model (102) and the system parameter acquired with the adapted theoretical model (102) does not exceed or does not drop below a predefined limiting value and / or lies within a predefined limiting value range, but
c5) generation of a fault message (108) relating to the presence of a fault or of destruction at the vehicle, at the vehicle train and / or in the theoretical model (102) if the deviation between the system parameter acquired with the original theoretical model (102) and the system parameter acquired with the adapted theoretical model (102) exceeds or drops below the predefined limiting value and / or lies outside of the predefined limiting value range.

2. Method according to claim 1, **characterised in that** the operating data of the vehicle or of the vehicle train continue to contain request signals of the driver, route data, vehicle data and the like.

3. Method according to claim 1 or 2, **characterised in that** the at least one system parameter which is to be monitored is a safety-relevant system parameter such as the braking power of the vehicle or of the vehicle train.

4. Method according to one of the preceding claims, **characterised in that** the initiated countermeasure is rapid braking.

## Revendications

1. Procédé de contrôle d'au moins un paramètre de système influençant une propriété de fonctionnement de véhicules ou de trains à l'aide d'un modèle (102) théorique adaptable, lequel produit un comportement théorique du véhicule ou du train à partir de données de fonctionnement du véhicule ou du train, comportant les stades suivantes :
a) détermination d'un comportement réel du véhicule ou du train à partir de données de fonctionnement comme l'accélération et/ou la décélération du véhicule ou du train,
b) comparaison (103) du comportement réel du véhicule ou du train au comportement (102) théorique du véhicule ou du train et
c1) si le comportement théorique du véhicule ou du train coïncide avec le comportement réel du véhicule ou du train,
c2) contrôle (104) du paramètre de système par le modèle théorique et, si le paramètre de système est supérieur à une valeur limite supérieure limite donnée à l'avance ou est inférieure à une valeur limite inférieure donnée à l'avance et/ou est en-dehors d'une plage de valeurs limites données à l'avance, production d'un message (106) d'erreur et/ou production d'indications pour le conducteur du train et/ou prise d'une contre-mesure ou
c3) adaptation du modèle (102) théorique jusqu'à ce que le comportement théorique du véhicule ou du train coïncide avec le comportement réel du véhicule ou du train et continuation ensuite par le stade c2),
**caractérisé en ce que**
c4) on n'effectue un contrôle du paramètre de système par le modèle (102) théorique adapté suivant le stade c2) que si un écart entre le paramètre de système déterminé par le modèle (102) théorique initial et le paramètre de système déterminé par le modèle (102) théorique adapté n'est pas supérieur à une valeur limite supérieure donnée à l'avance ou n'est pas inférieure à une valeur limite inférieure donnée à l'avance et/ou se trouve dans une plage de valeurs limites données à l'avance, toutefois
c5) on produit un message (108) d'erreur sur la présence d'une erreur ou d'un incident dans le véhicule, dans le train et/ou dans le modèle (102) théorique, si l'écart entre le paramètre de système déterminé par le modèle (102) théorique d'origine et le paramètre de système déterminé par le modèle (102) théorique adapté est supérieur à la valeur limite supérieure donnée à l'avance ou est inférieure à la valeur limite inférieure donnée à l'avance et/ou est à l'extérieur de la plage de valeurs limites données à l'avance.

2. Procédé suivant la revendication 1, **caractérisé en ce que** les données de fonctionnement du véhicule ou du train comportent, en outre, des signaux de demande du conducteur, des données de voie, des données de véhicule ou analogues.

3. Procédé suivant la revendication 1 ou 2, **caractérisé en ce que** le au moins un paramètre de système à contrôler est un paramètre pertinent pour la sécurité, comme la puissance de freinage du véhicule ou du train.

4. Procédé suivant l'une des revendications précédentes, **caractérisé en ce que** la contre-mesure prise consiste en un freinage rapide.
